# EUROPEAN PATENT APPLICATION

(11) **EP 1 467 504 A1**
(43) Date of publication of application: **13.10.2004**
(21) Application number: 02806081.2
(22) Date of filing: 26.12.2002
(51) Int. Cl.: H04B 7/26

(54) **ALONG-OPTICAL-FIBER RADIO COMMUNICATION SYSTEM**

(30) Priority: 28.12.2001 JP 2001401345
(71) Applicant: MATSUSHITA ELECTRIC INDUSTRIAL CO., LTD, Kadoma-shi, Osaka 571-0000 (JP)
(72) Inventor: HIRANO, Jun, Yokosuka-shi, Kanagawa 239-0843 (JP); ARAMAKI, Takashi, Yokohama-shi, Kanagawa 232-0061 (JP)
(74) Representative: Leeming, John Gerard
(86) International application number: PCT/JP2002/013636
(87) International publication number: WO 2003/058851

(57) **Abstract**

A system to reduce number of APs (base station) and handover number (number of times to switch the APs) and secure a communication feasible area to prevent break of communication between a mobile body side and a ground side is disclosed. In this system, an optical fiber (15) connected to an AP (base station) (11) is branched by optical distribution means (17), and a plurality of tail ends of the optical fiber is' thereby formed. E/O, O/E conversion means (optical signal/electronic signal interconversion means) (19) which convert optical signals and electronic signals and antennas (21) emitting radio waves are respectively provided at the plurality of tail ends of the optical fiber. The respective antennas are arranged along a track (3) on which a mobile body (1) moves. The whole track is covered by a continuous area comprised of communication feasible areas (23) for the respective antennas. Consequently, the communication feasible area on the track of the mobile body by one AP can be wide.

## Description

### TECHNICAL FIELD

The present invention relates to an optical fiber trackside radio communications system, which enables communication between a mobile body side and a ground side, more particularly an optical fiber trackside radio communications system in a communications system wherein contents such as a newspaper story can be delivered from the ground side to a plurality of portable terminals moving along with a train, a bus, an airplane, a motorcar, a ship etc.; and portable terminal in a mobile body can be connected to an external network such as the Internet.

### BACKGROUND ART

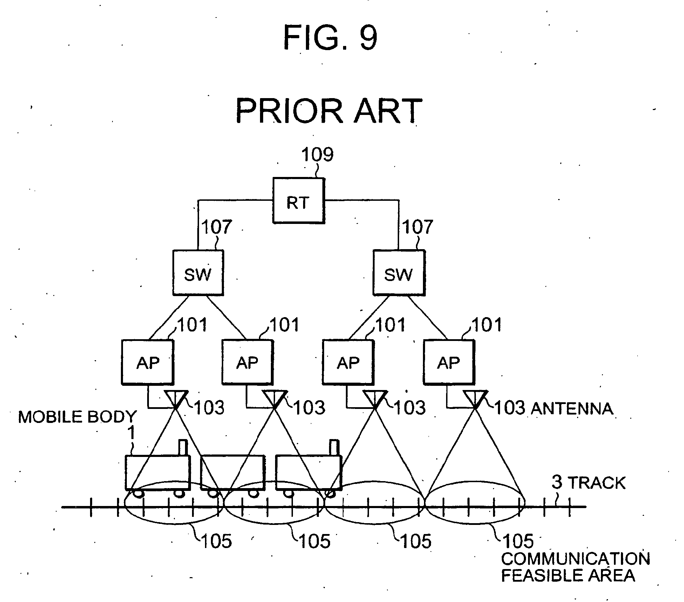

It is conventionally known that a plurality of base stations are arranged along with a track of various mobile bodies such as a train, a bus, an airplane, a motorcar and a ship. FIG. 9 is a pattern diagram showing a conventional and general trackside communications system. Radio waves are emitted from an antenna 103 of a base station (hereinafter also referred to as AP (Access Point)) 101, and a communication feasible area 105 is formed on a track 3 of a mobile body 1. Communication between the mobile body 1 or a terminal arranged in the mobile body 1 and the AP 101 on the ground side becomes thereby possible. The terminal arranged in the mobile body 1 becomes thereby able to be connected to an external network such as the Internet via the AP 101. When switching connection, the terminal in the mobile body 1 is connected to other AP 101 over a switch (SW) 107 and a router (RT) 109.

For example, in Japanese Unexamined Patent Application Publication No. S60-77532, a mobile body information transmission device, which enables a handy terminal transmission/reception device in the mobile body to transmit and receive information by laying a transmission network (optical fiber cable) along a line on which a mobile body moves, and providing the transmission network with a plurality of relay points with transmission/reception device is disclosed. In addition, descriptions are given that transmission and reception of information between the relay point with transmission/reception device and the handy terminal transmission/reception device is relayed by providing a transmission/reception relay instrument in the mobile body.

As a technique to set a communication feasible area for radio communication along a track of a mobile body, for example, there is a road transmission system disclosed in Japanese Unexamined Patent Application Publication No. 2001-16157. In this Japanese Unexamined Patent Application Publication No. 2001-16157, a technique to seamlessly form cells (communication feasible area) on the road by arranging along the road a plurality of transmission stations which transmit OFDM modulated signals having the same contents to the same cell by the same frequency, setting one of the plurality of transmission stations to a master transmission station, and making other transmission stations (slave transmission stations) receive radio waves emitted from the master transmission station or other slave transmission stations and retransmit to their own cells is disclosed.

In the conventional techniques, however, a communication feasible area covered by one AP (base station) is limited. Therefore, there is a problem that many APs have to be arranged along the track. Arrangement and maintenance of these APs are costly. In addition, in order to enable a communication terminal in a mobile body to be always available for communication, it is particularly necessary to consider possibilities, for example, that radio interference might be raised at the location where cells formed by two different antennas are overlapped, and communications might be broken in handover to switch communication from one AP to other AP. However, frequency resources are limited. Therefore, there is a problem that it is not easy to avoid radio interference by using many frequencies.

It is necessary to consider installation modes of antennas, according to various conditions such as geographical conditions around a track such as tunnels, bridges, and residential areas; administrative matters of railroad etc. that control companies are changed, due to cross-prefectural/national border communication and mutual entry; and physical conditions such as limitation of branch number of the optical fiber and limitation of laid down distance of the optical fiber. Further, particularly when significantly many terminals exist in a mobile body, processing load at an AP becomes large, and it becomes necessary to secure time for handover (switching base stations).

### DISCLOSURE OF THE INVENTION

In light of the foregoing problems, it is an object of the invention to provide an optical fiber trackside radio communications system, with which number of APs and handover number (number of times to switch the APs (base station)) can be decreased, and a communication feasible area can be secured to prevent break of communication between a mobile body side and a ground side.

In order to attain the foregoing object, in the invention, an optical fiber is connected to a base station, the optical fiber is branched into a plurality of end tails, a plurality of optical signal/electronic signal interconversion means and a plurality of antennas are arranged at the plurality of end tails, and the antennas are arranged along a track of a mobile body.

Due to this construction, number of APs is decreased, and effective communication between the mobile body side and the ground side is enabled.

In the invention, the respective antennas are arranged so that the track is totally covered by a continuous area comprised of communication feasible areas of the respective antennas.

Due to this construction, the communication feasible area can be secured to prevent break of the communication between the mobile body side and the ground side.

In the invention, optical fiber trackside radio communications subsystems, wherein an optical fiber is connected to a base station, the optical fiber is branched into a plurality of end tails, a plurality of optical signal/electronic signal interconversion means and a plurality of antennas are arranged at the plurality of end tails, and the antennas are arranged along a track of a mobile body are adjacently provided, and these adjacent two optical fiber trackside radio communications subsystems use respective radio waves having different frequencies from each other.

Due to this construction, it becomes possible to prevent communication break in handover to switch base stations.

In the invention, an external communication means to communicate with the base station and an internal communication means to communicate with a terminal are provided in the mobile body. Communication between the terminal and 'the base station becomes possible via the external communication means and the internal communication means.

Due to this construction, it becomes easy to control communication of a plurality of terminals in the mobile body and to control connection switching of the base stations.

In the invention, a plurality of the internal communication means are provided in the mobile body, and the plurality of the internal communication means are connected to each other.

Due to this construction, it becomes possible to provide the plurality of internal communication means at each given location in the mobile body, and the terminal in the mobile body can be connected to the base station via the respective internal communication means and the respective external communication means.

In the invention, optical fiber trackside radio communications subsystems, wherein an optical fiber is connected to a base station, the optical fiber is branched into a plurality of end tails, a plurality of optical signal/electronic signal interconversion means and a plurality of antennas are arranged at the plurality of end tails, and the antennas are arranged along a track of a mobile body are adjacently provided at a given interval.

Due to this construction, it becomes possible to reduce number of APs and provide a communication system using only one frequency.

In the invention, at least two external communication means are provided in the mobile body, and a distance between at least two external communication means thereof is set to be larger than the given interval so that communication between the mobile body and the base station is enabled even when the mobile body passes a communication unfeasible area due to the given interval.

Due to this construction, even when the mobile body passes the communication unfeasible area provided by the given interval, a continuous communication between a terminal in the mobile body and the base station becomes possible via one of the external communication means.

In the invention, when the mobile body passes the communication unfeasible area, the mobile body can communicate with the two different optical fiber trackside radio communications subsystems via the respective two external communication means.

Due to this construction, it becomes possible to secure handover time required when the mobile body passes the communication unfeasible area, and surely switch connection of the terminal in the mobile body from one network to which one AP belongs to the other network to which other AP belongs.

Further, a modulation method good at multipath control is used for the communication between the antenna and the mobile body.

Due to this construction, even when the communication feasible areas of the antennas connected to the same base station are overlapped, communication between the terminal in the mobile body and the base station becomes possible.

### BRIEF DESCRIPTION OF THE DRAWINGS

FIG. 1 is a pattern diagram showing a construction of a ground side according to the invention;
FIG. 2 is a pattern diagram showing a communication feasible area formed by one AP according to the invention;
FIG. 3 is a pattern diagram showing a construction of a mobile body side according to the invention;
FIG. 4A is a figure showing a relation of a case wherein adjacent communication feasible areas are overlapped, and radio wave frequencies used in the adjacent communication feasible areas are the same;
FIG. 4B is a figure showing a relation of a case wherein adjacent communication feasible areas are overlapped, and radio wave frequencies used in the adjacent communication feasible areas are different from each other;
FIG. 4C is a figure showing a relation of a case wherein adjacent communication feasible areas are not overlapped, and radio wave frequencies used in the adjacent communication feasible areas are the same;
FIG. 4D is a figure showing a relation of a case wherein adjacent communication feasible areas are not overlapped, and radio wave frequencies used in the adjacent communication feasible areas are different from each other;
FIG. 5 is a pattern diagram to explain in detail a case wherein a plurality of APs according to the invention are arranged, adjacent communication feasible areas are overlapped, and radio wave frequencies used in the adjacent communication feasible areas are different from each other;
FIG. 6 is a pattern diagram to explain in detail a case wherein a plurality of APs according to the invention are arranged, and adjacent communication feasible areas are not overlapped;
FIG. 7A is a pattern diagram showing a construction of a mobile body side in a second embodiment according to the invention, and showing a construction wherein respective external communication means are provided in a first vehicle and a last vehicle of a mobile body comprising a plurality of vehicles, and internal communication means are provided in the respective vehicles and connected to each other;
FIG. 7B is a pattern diagram showing a construction of a mobile body side in the second embodiment according to the invention, and showing a construction wherein two external communication means are provided in respective vehicles, and internal communication means provided in the respective vehicles can be connected to the both external communication means in the respective vehicles;
FIG. 8A is a pattern diagram to explain an operation in handover according to the second embodiment of the invention, which shows a state that a mobile body 1 moves into a communication unfeasible area 45;
FIG. 8B is a pattern diagram to explain the operation in the handover according to the second embodiment of the' invention, which shows a state that a first external communication means is in a second communication feasible area, and a second external communication means is in a first communication feasible area;
FIG. 8C is a pattern diagram to explain the operation in the handover according to the second embodiment of the invention, which shows a state before the second external communication means is out of the first communication feasible area and enters the communication unfeasible area;
FIG. 8D is a pattern diagram to explain the operation in the handover according to the second embodiment of the invention, which shows a state that both the first and the second external communication means enter the second communication feasible area: and
FIG. 9 is a pattern diagram showing a conventional and general trackside communications system.

### BEST MODE FOR CARRYING OUT THE INVENTION

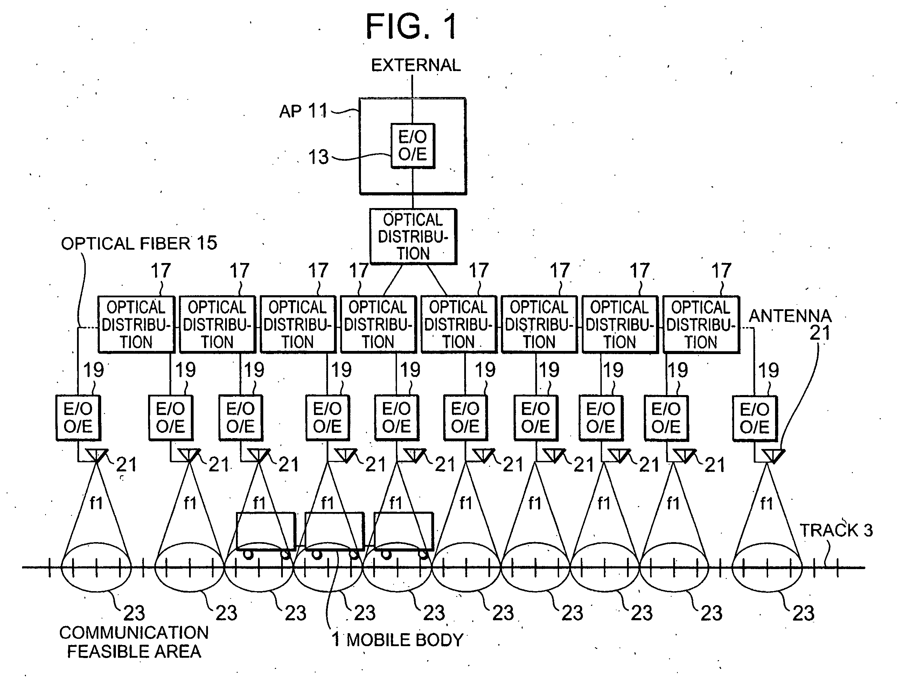

Descriptions will be hereinafter given of embodiments of an optical fiber trackside radio communications system of the invention with reference to the drawings. First, a construction of the optical fiber trackside radio communications system of the invention will be described. FIG. 1 is a pattern diagram showing a construction of a ground side according to the invention. On the ground side shown in FIG. 1, there is an AP (Access Point, or base station) 11 comprising an E/O, O/E conversion means (optical signal/electronic signal interconversion means) 13 which interconverts electronic signals and optical signals. This E/O, O/E conversion means (optical signal/electronic signal interconversion means) 13 can be realized by a photoelectricity interconversion device using e.g. LD (Laser Diode) or PD (Photo Diode), which interconverts optical signals and electronic signals. This AP 11 plays a role as a relay base station between a terminal 35 in a mobile body 1 moving on a track 3 and other end terminal or an external network such as the Internet with which this terminal 35 communicates.

Meanwhile, an optical fiber 15 is laid along the track 3 on which the mobile body 1 moves. An end of this optical fiber 15 is connected to the AP 11. An optical signal converted by the E/O, O/E conversion means 13 in the AP 11 is transmitted into the optical fiber 15. Other end of the optical fiber 15 is branched by optical distribution means 17, which are provided at given intervals to become a plurality of tail ends. Due to this construction, the respective plurality of tail ends of the optical fiber 15 are provided with the same data from the AP 11. In FIG. 1, as an example, a tree structure, wherein many tail ends are formed by providing a plurality of optical distribution means 17 which branch one optical fiber 15 into two is shown. It is, however, possible to adopt a star structure, wherein one optical distribution means 17 which branches one optical fiber 15 into many tail ends is provided.

At each tail end of the optical fiber 15 branched into plurality by the optical distribution means 17, an E/O, O/E conversion means (optical signal/electronic signal interconversion means) 19, which interconverts optical signals transmitted in the optical fiber 15 and electronic signals used by an antenna 21 and the antenna 21 are provided. Due to this E/O, O/E conversion means 19 and the antenna 21, it becomes possible to emit optical signals transmitted by the optical fiber 15 as radio waves, provide the optical fiber with radio waves received by the antenna 21 as optical signals, and intercommunicate between the AP 11 and the terminal 35 in the mobile body 1. Communication feasible areas 23 of the antennas 21 preferably cover the whole track 3, and the adjacent communication feasible areas 23 can be overlapped. These plurality of E/O, O/E conversion means 19 and antennas 21 are arranged at a given location aside of the track 3 on which the mobile body 1 moves.

The location of the respective antennas 21 is set so that the track 3 can be totally covered by the respective communication feasible areas 23 of the respective antennas 21. It is preferable that directivity of the antenna 21 is set so that the track 3 is effectively covered by the respective communication feasible areas 23 of the respective antennas 21. It is possible to save the power by turning the power source of the antenna 21 ON only when the mobile body 1 comes up, by cooperating with the railway traffic control system or obtaining information from other antenna 21 or the AP 11. It is possible to conduct effective communication by changing directivity of the antenna 21 corresponding to movement of the mobile body 1.

The respective antennas 21 connected to the same AP 11 are provided with the same data. Therefore, a radio wave having the same frequency can be used for the respective antennas 21. As a modulation method used for communication, a modulation method, which is good at multipath control such as OFDM (Orthogonal Frequency Division Multiplexing) and CDMA (Code Division Multiple Access) is preferably used. It is possible to adopt a method to inhibit the multipath itself by controlling directivity of the transmission/reception antenna.

According to the foregoing construction of the ground side, it becomes possible to lengthen along the track 3 the communication feasible area covered by one AP 11 on the track 3. In result, it becomes possible to reduce handover number (number of times to switch the APs (base station) 11) for the mobile body 1 moving on the track 3.

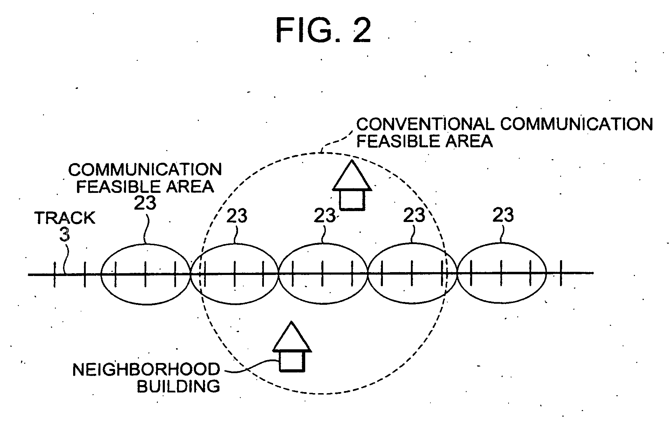

FIG. 2 is a pattern diagram showing a communication feasible area formed by one AP according to the invention. As shown in this FIG. 2, it becomes possible that the track 3 is effectively covered by the respective communication feasible areas 23 of the respective antennas 21 connected to one AP 11. In addition, compared to the conventional cases, it becomes possible to focus the communication feasible area on the track 3 and form a linear communication feasible area along the track 3. Therefore, for example, it becomes possible to prevent nuisance such as noise and electronic jamming which have been raised in neighborhood buildings due to emission of extra radio waves.

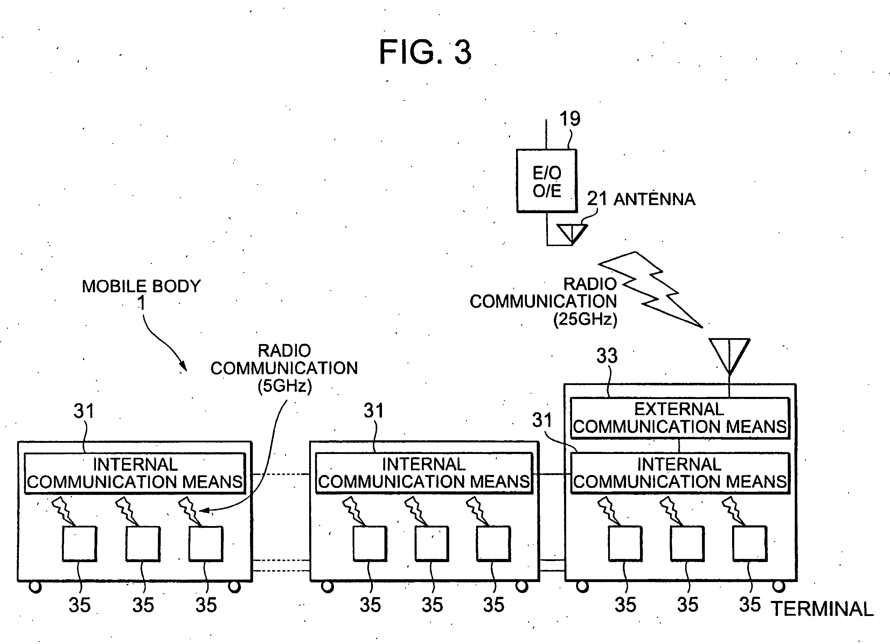

Next, descriptions will be given of a construction of the mobile body 1 side. FIG. 3 is a pattern diagram showing a construction of the mobile body side according to the invention. Descriptions will be hereinafter given of a case as an example that the mobile body 1 is a train having a plurality of vehicles. However, the mobile body 1 is not limited to trains. The mobile body 1 comprises the plurality of vehicles. In. each vehicle, there are significantly many terminals 35 such as portable terminals of passengers and the terminals 35 fixed in each vehicle.

The mobile body 1 comprises an internal communication means 31 and an external communication means 33. For example, the terminal 35 in each vehicle and the internal communication means 31 can be connected to each other by 5 GHz radio communication. Meanwhile, the external communication means 33 of the mobile body 1 and the antenna 21 on the ground side can be connected to each other by 25 GHz radio communication. The plurality of internal communication means 31 can be connected to each other by wire/ 60 GHz radio communication. A network can be thereby constructed in the mobile body 1, and the terminal 35 connected to this network can be thereby connected to the AP 11 via the internal communication means 31 and the external communication means 33. In FIG. 3, it is shown that one internal communication means 31 exists in one vehicle. However, construction is not limited to the foregoing, and the internal communication means 31 can be arranged in other construction as long as the terminal 35 in the mobile body 1 is available for communication.

In the above mentioned construction of the ground side, a length of the track 3 which can be covered by one AP 11 depends on various conditions. As various conditions, for example, there are geographical conditions around the track 3 such as tunnels, bridges, and residential areas; administrative matters of railroad etc. that control companies are changed, due to cross-prefectural/national border communication and mutual entry; and physical conditions such as limitation of branch number of the optical fiber 15 and limitation of laid down distance of the optical fiber 15.

For example, there is an upper limit for the branch number N of the optical fiber 15. Generally, a maximum value of a length of the optical fiber 15 in the track direction can be expressed as (distance dₛ in the track direction of the communication feasible area 23 formed by one antenna 21 × a maximum branch feasible number N of the optical fiber 15 connected to one AP 11). That is, it is possible to cover the communication feasible area having a smaller distance in the track direction than a distance of dₛ×N by using one AP 11. The distance dₛ in the track direction of the communication feasible area 23 formed by one antenna 21 may vary depending on geographical conditions.

When the whole track 3 cannot be covered by a communication feasible area of one AP 11 based on the foregoing various conditions, it is possible to cover the communication feasible area on the track 3 by arranging the plurality of APs 11 and using the plurality of antennas 21 belonging to the respective plurality of APs 11.

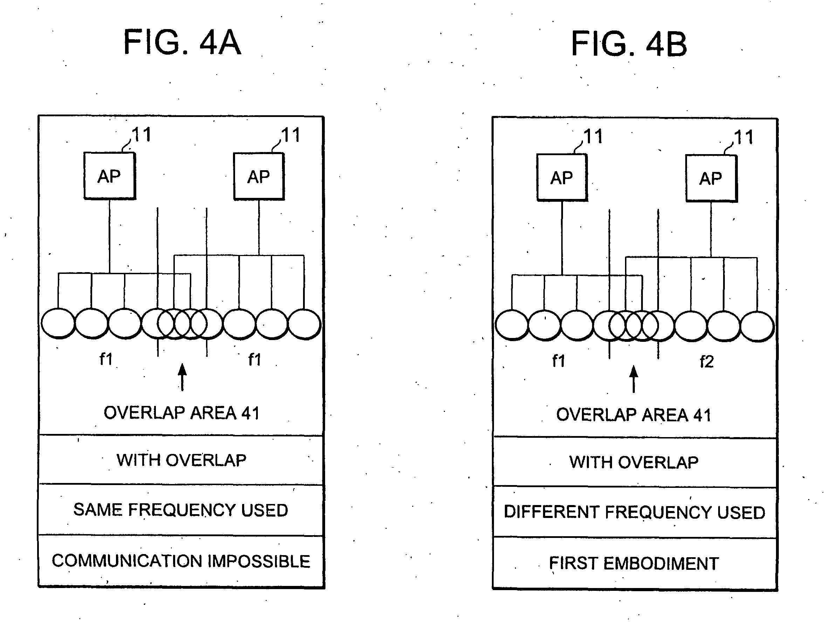

As shown in FIGS. 4A to 4D, it is thinkable that when the plurality of APs 11 are arranged, there are mainly four possibilities in relation to frequencies used in respective communication feasible areas of the adjacent APs 11 and respective communications. FIGS. 4A to 4D are figures showing whether the adjacent communication feasible areas are overlapped or not, and whether respective radio wave frequencies used in the adjacent communication feasible areas are the same or not. In FIGS. 4A to 4D, the E/O, O/E conversion means 19, the optical distribution means 17 etc. are omitted. Different APs 11 belong to different subnets from each other, for example. Different antennas 21 which are connected to different APs 11 transmit different data.

First, descriptions will be given of a case, wherein adjacent communication feasible areas are overlapped, and radio wave frequencies used in the adjacent communication feasible areas are the same (FIG. 4A). In this case, in an overlap area 41, radio waves having the same frequency are received from the respective adjacent communication feasible areas, the radio wave on one hand becomes noise for the radio wave on the other hand, and communication actually becomes impossible. Consequently, in the overlap area 41, it is impossible to provide different data by using radio waves having the same frequency.

Next, descriptions will be given of a case, wherein adjacent communication feasible areas are overlapped, and radio wave frequencies used in the adjacent communication feasible areas are different from each other (FIG. 4B). In this case, in the overlap area 41, there is no interference with each other, the radio wave on one hand never becomes noise for the radio wave on the other hand, and communication is possible. Regarding the construction shown in this FIG. 4B, detailed descriptions will be given later as a first embodiment.

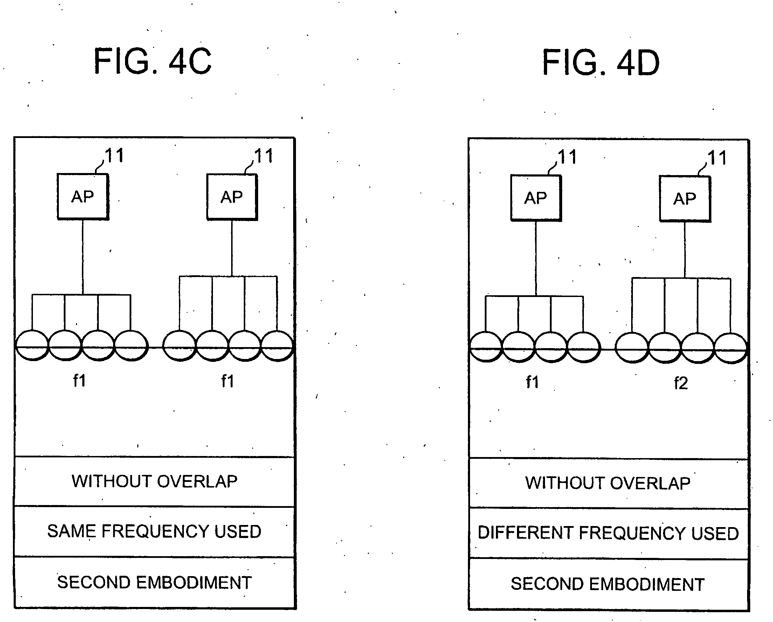

Next, descriptions will be given of cases, wherein adjacent communication feasible areas are not overlapped (FIGS. 4C and 4D). In these cases, there is no overlap area 41, radio wave on one hand never becomes noise for the radio wave on the other hand, and communication is possible. Regarding the constructions shown in these FIGS. 4C and 4D, detailed descriptions will be given later as a second embodiment.

In this specification, an area, wherein radio waves are received from the both antennas 21 connected to different APs 11 is defined as the overlap area 41. Therefore, when different APs 11 conduct communication by using different frequencies from each other, the mobile body 1 in the overlap area 41 of these APs 11 can communicate with the both different APs 11 by using different frequencies from each other (FIG. 4B). Meanwhile, when different APs 11 conduct communication by using the same frequency from each other, in the overlap area 41 the radio wave on one hand becomes noise for the radio wave on the other hand and communication actually becomes impossible (FIG. 4A).

### <First embodiment>

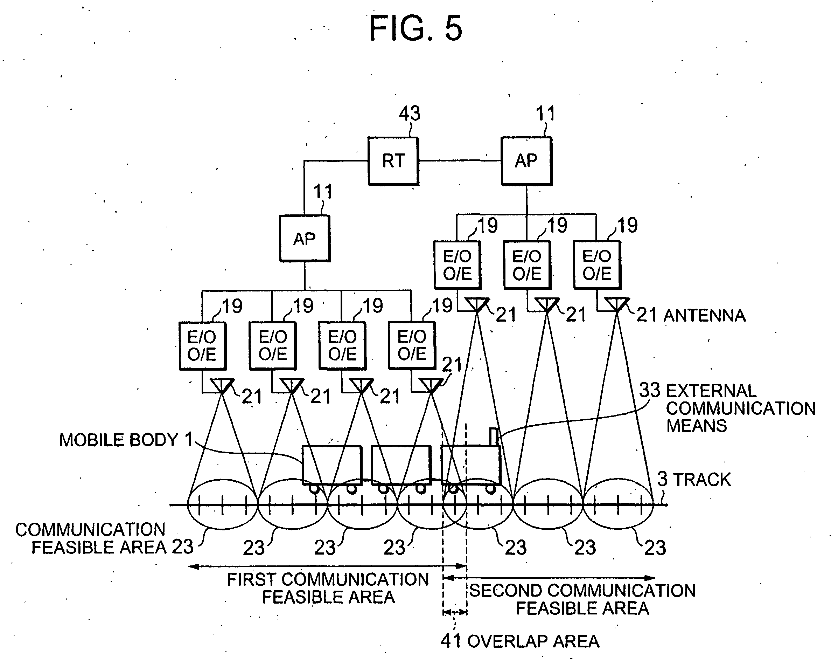

Next, as the first embodiment, the case wherein the adjacent communication feasible areas are overlapped and radio waves used in the adjacent communication feasible areas are different from each other (FIG. 4B) will be described in detail. FIG. 5 is a pattern diagram to explain a case in detail, wherein the plurality of APs according to the invention are arranged, the adjacent communication feasible areas are overlapped, and the radio wave frequencies used in the adjacent communication feasible areas are different from each other. Hereinafter, a communication feasible area of the AP 11 connected before movement is sometimes referred to as a first communication feasible area, and a communication feasible area of the AP 11 connected after movement is sometimes referred to as a second communication feasible area.

An optical fiber trackside radio communications system shown in FIG. 5 comprises the plurality of APs 11. The plurality of APs 11 are respectively connected to the plurality of antennas 21 arranged along the track 3 via the optical fiber 15, and the communication feasible area is formed on the track 3 as shown in FIG. 1. At the location where two communication feasible areas formed by the different APs 11 are adjacent, the antennas 21 are arranged so that the two communication feasible areas can be overlapped. The different APs 11 are connected by a router 43.

When the terminal 35 in the mobile body 1 moving on the track 3 switches connection from one AP 11 to other AP 11, time when the terminal 35 can concurrently connect to the both APs 11 is required. By switching connection from one AP 11 to other AP 11 during this time, it becomes possible to smoothly switch the connection, prevent connection break, and prevent the terminal 35 side from noticing connection switching. In addition, it is required to switch connections (handover) for all the terminals 35 in the mobile body 1 from one AP 11 to other AP 11 during when the mobile body 1 is in the overlap area 41.

In switching the connection from one AP 11 to other AP 11, connection switching (handover) is conducted for all the terminals 35 in the mobile body 1 in the overlap area 41. Here, where a distance in the track direction of the overlap area 41 is d_{OR}, and a speed of the mobile body is v, a time t _{OR} when one point on the mobile body 1 exists in the overlap area 41 is expressed as t _{OR}=d _{OR}/v. Therefore, connection switching (handover) for all the terminals 35 in the mobile body 1 and the external communication means 33 on the mobile body 1 has to be conducted within the time t _{OR}. In view of the other side, the distance d_{OR} in the track direction of the overlap area 41 has to be at least v·t _{OR}. As a result, it surely becomes possible to conduct handover for the terminals 35 in the mobile body 1 between the different APs 11.

According to the foregoing first embodiment, it becomes possible to lengthen along the track 3 the communication feasible area on the track 3 covered by one AP 11, and reduce handover number (number of times to switch the APs (base station) 11) for the mobile body 1 moving on the track 3. Further, even when the plurality of APs 11 are laid along the track 3 according to various conditions, it becomes possible to secure the communication feasible area to prevent break of communication between the mobile body 1 side and the ground side. It also becomes possible to arrange the respective antennas 21 by calculating time necessary for handover. Furthermore, different frequencies for adjacent communication feasible areas can be obtained by alternately changing frequencies used. Therefore, the foregoing system can be realized by only using two frequencies, f₁ and f₂.

### <Second embodiment>

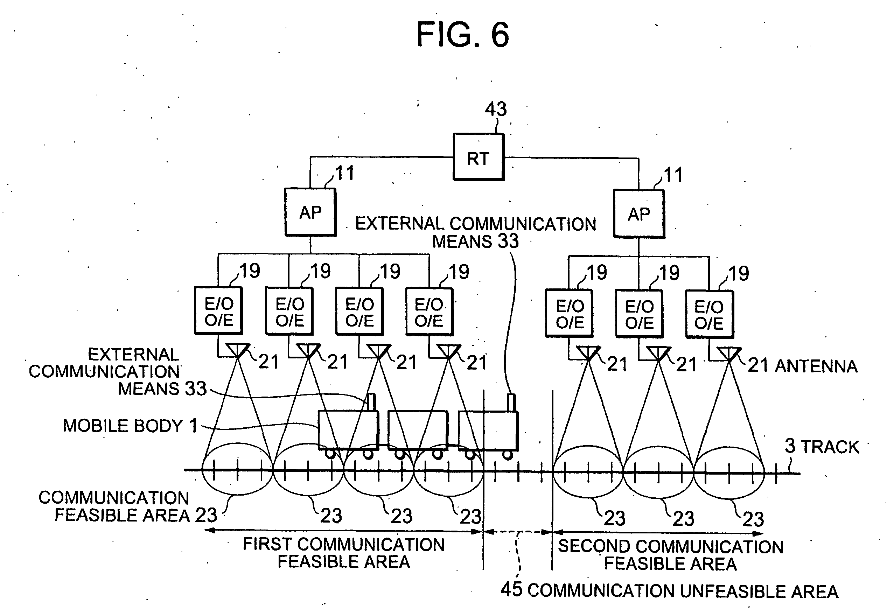

Next, as a second embodiment, detailed descriptions will be given of the case, wherein the adjacent communication feasible ranges are not overlapped (FIGS. 4C and 4D). FIG. 6 is a pattern diagram to explain a case in detail, wherein the plurality of APs according to the invention are arranged, and the adjacent communication feasible areas are not overlapped. An optical fiber trackside radio communications system shown in FIG. 6 comprises the plurality of APs 11 as in the first embodiment. The plurality of APs 11 are respectively connected to the plurality of antennas 21 arranged along the track 3 via the optical fiber 15, and the communication feasible area is formed on the track 3. At the location where two communication feasible areas formed by the different APs 11 are adjacent, the antennas 21 are arranged so that the two communication feasible areas are not overlapped. The different APs 11 are connected by the router 43.

In the optical fiber trackside radio communications' system shown in FIG. 6, there is an area, wherein there is no communication feasible area on the track 3, which is capable of connecting to either of the two different APs 11 (area without overlap). However, on the other hand, in order to prevent communication break when the terminal 35 in the mobile body 1 moving on the track 3 switches connection from one AP 11 to other AP 11, time when the terminal 35 can concurrently be connected to the both APs 11 is required. In the second embodiment, a distance in the track direction of the area without overlap (hereinafter referred to as communication unfeasible section) and a construction of the mobile body 1 side are designed so as to prevent communication break of the terminal 35.

As shown in FIG. 6, when the communication unfeasible section exists, communication is broken in the communication unfeasible section, where the mobile body 1 is provided with one external communication means 33 as shown in FIG. 3. Therefore, it is designed that the mobile body 1 is provided with at least two external communication means 33, and one of these external communication means 33 always exists in the communication feasible area to enable communication.

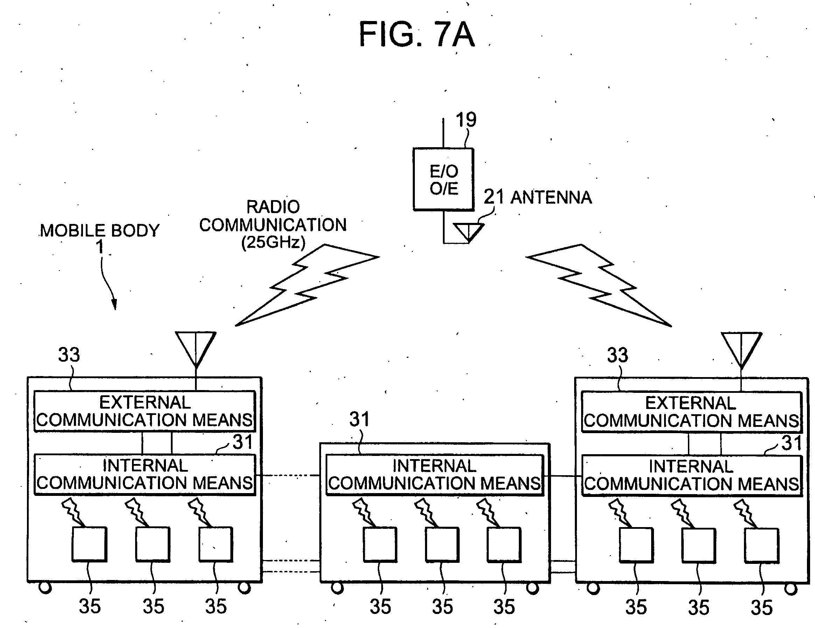

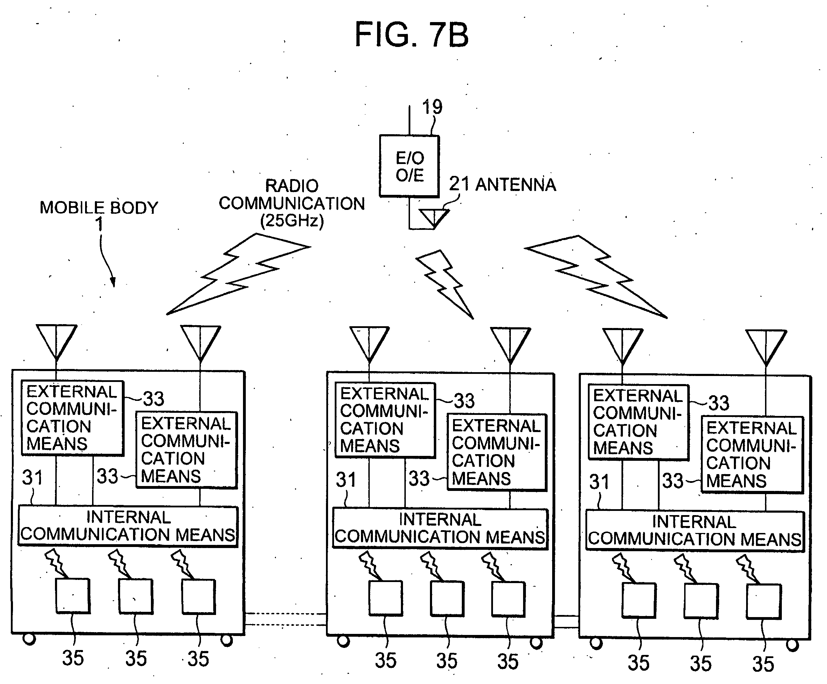

FIG. 7A is a pattern diagram showing a construction of the mobile body side in the second embodiment according to the invention. A first vehicle and a last vehicle of the mobile body 1 having a plurality, of vehicles are respectively provided with the external communication means 33, to which the internal communication means 31 provided in the respective vehicles are connected. Therefore, the terminal 35 in the mobile body 1 can be connected to the both external communication means 33 via the internal communication means 31 of the respective vehicles. FIG. 7B is a pattern diagram showing a construction of the mobile body side in the second embodiment according to the invention. Respective vehicles are provided with two external communication means 33, and the internal communication means 31 provided in the respective vehicles can be connected to the both external communication means 33 of the respective vehicles.

By setting a distance in the track direction of the communication unfeasible area 45 in consideration of the constructions of the mobile body 1 shown in these FIGS. 7A and 7B, the terminal 35 in the mobile body 1 can be always connected to the AP 11 via at least one external, communication means 33.

The mobile body 1 has a given length L in the track direction. As shown in FIG. 7A, the external communication means 33 are installed with an interval of a given distance d_{T} (d_{T}≦L) in the track direction in at least two locations in the mobile body 1 (for example, the first vehicle and the last vehicle), and respective vehicles are connected so that the terminal 35 in the mobile body 1 can be connected to the both external communication means 33. A distance d_{f} in the track direction of the communication unfeasible area 45 is set to be smaller than the distance d_{T} between the two external communication means 33 on the mobile body 1 (d_{f}<d_{T}). Due to this construction, the terminal 35 in the mobile body 1 can be always connected to at least one AP 11.

In some cases, time when the terminal 35 is connected to the both APs 11 is required in order to conduct connection switching (handover) for all the terminals 35 in the mobile body 1 from one AP 11 to other AP 11. Where a speed of the mobile body 1 is v, and time required for the handover is t_{HO}, it can be expressed as t_{HO}=(d_{T}-d_{f})/v. t_{HO} is determined by a network performance and approximate number of terminals housed in the mobile body 1. The speed v of the mobile body 1 and the distance d_{T} between the two external communication means 33 are known. Therefore, the distance d_{f} in the track direction of the communication unfeasible area 45 is given by d_{f}= d_{T}-v·t_{HO}.

Therefore, when it is desired to take a long time required for the handover, the distance d_{T} is preferably set to be long and the distance d_{f} is preferably set to be short: Meanwhile, when it is desired to set the distance d_{f} to be long as long as possible to reduce number of the trackside APs 11 as a whole, d_{T} is preferably set to be long and the time t_{HO} required for the handover is preferably set to be short. For example, where a train comprised of 16 vehicles (length of one vehicle: 20 m) whose head part and the tail part are provided with the external communication means 33 moves at a speed of v=70 km/h, and time required for the handover is t_{HO}=10 sec, it is calculated as d_{f}=126 m.

The distance d_{f} in the track direction of the communication unfeasible area 45 calculated as above is a maximum distance. When the distance d_{f} in the track direction of the communication unfeasible area 45 is larger than the maximum distance, communication in the mobile body 1 is broken. When respective frequencies of the radio waves used in the respective adjacent communication feasible areas are different, the distance d_{f} can be small as long as desired. Switching the frequencies used for communication is conducted by sending a switching message etc. When radio wave frequencies used in the respective adjacent communication feasible areas are the same, it is possible to reduce the distance d_{f} to the distance with which the radio waves of the adjacent communication feasible areas are not interfered with each other.

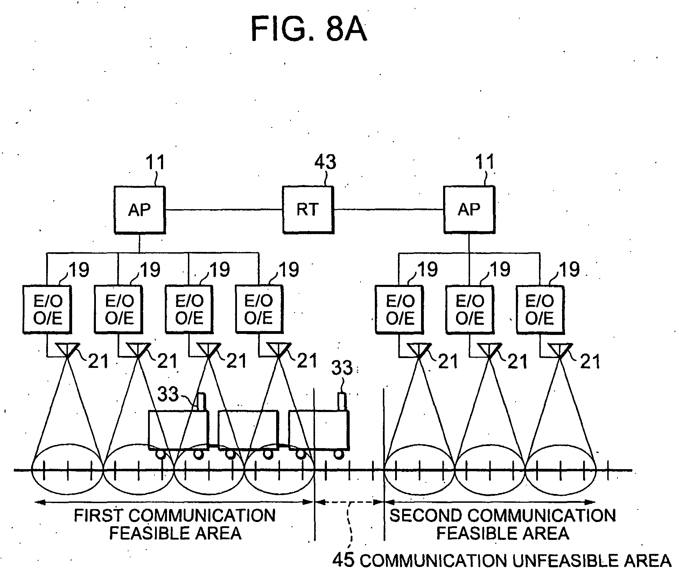

Descriptions will be hereinafter given of an operation in terms of the handover in the communication unfeasible area 45. FIGS. 8A to 8D are pattern diagrams to explain the operation in the handover according to the second embodiment of the invention. Hereinafter, as an example, descriptions will be given of the case that the mobile body 1 is the train comprising the plurality of vehicles shown in FIG. 7A. The external communication means 33 provided in the first vehicle of the mobile body 1 is referred to as a first external communication means 33, and the external communication means 33 provided in the last vehicle of the mobile body 1 is referred to as a second external communication means 33.

First, when the mobile body 1 moves into the communication unfeasible area 45, the first external communication means 33 becomes incapable of communication (refer to FIG. 8A). For example, it is possible to detect a traveling location of the mobile body 1, and detect that the first external communication means 33 is out of the first communication feasible area and enters into the communication unfeasible area 45. Here, all the terminals 35 in the mobile body 1 are set to be capable of communication via the second external communication means 33 and the first communication feasible area.

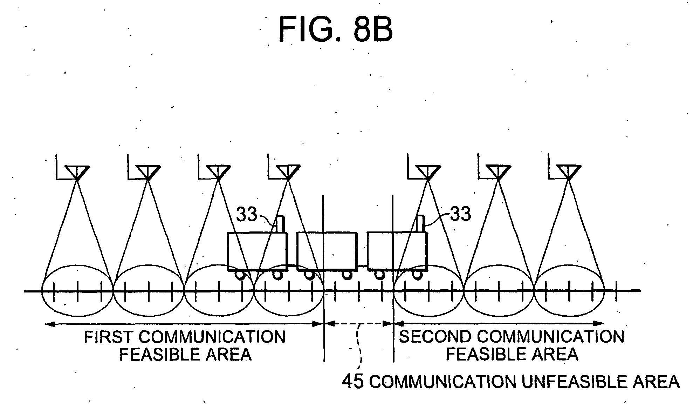

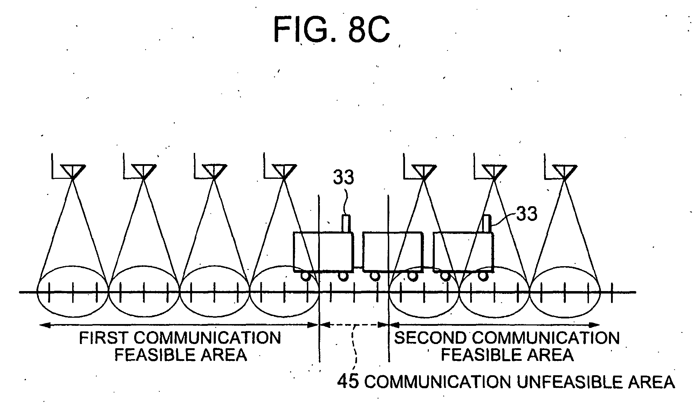

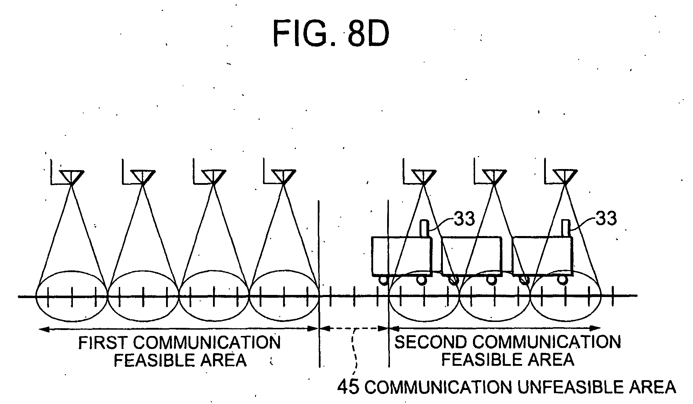

Next, the mobile body 1 moves, and the first external communication means 33 enters into the second communication feasible area (refer to FIG. 8B). Here, the first external communication means 33 is capable of communication in the second communication feasible area, the second external communication means 33 is capable of communication in the first communication feasible area, and the handover can be processed. The handover is, for example, conducted by sending information in relation to the handover to the first communication feasible area via the second external communication means 33, processing the handover on the ground side, and letting the first external communication means 33 receive the processing result via the second communication feasible area. The handover processing has to be conducted before the second external communication means 33 is out of the first communication feasible area and enters into the communication unfeasible area 45 (refer to FIG. 8C). When the mobile body 1 further moves, and the second external communication means 33 enters into the second communication feasible area (refer to FIG. 8D), it becomes possible that the terminal 35 in the mobile body 1 again conducts communication via either of the first or the second external communication means 33 and the second communication feasible area.

According to the foregoing second embodiment, it becomes possible that the communication feasible area on the track 3 which is covered by one AP 11 is lengthened along the track 3, and handover number (number of times to switch the APs (base station) 11) for the mobile body 1 moving on the track 3 is reduced. Further, even when the plurality of APs are laid along the track 3 according to various conditions; it becomes possible to secure a communication feasible area so as to prevent break of communication between the mobile body 1 side and the ground side with smaller number of APs 11 and smaller number of frequency channels than in the first embodiment. Furthermore, it becomes possible to provide the respective antennas 21 by calculating time required for the handover.

In the drawings (FIGS. 1, 5, 6, 8A to 8D, and 9), the mobile body 1 is shown bigger compared to the communication feasible areas 23 of the plurality of antennas 21 for convenience. However, the communication feasible area 23 formed on the track by one antenna 21 may be significantly wide compared to the length in the track direction of the mobile body 1, depending on the radio system used.

### INDUSTRIAL APPLICABILITY

As described above, according to the invention, an optical fiber is connected to a base station, the optical fiber is branched, a plurality of optical signal/electronic signal interconversion means and a plurality of antennas are arranged at end tails of the optical fiber, and the antennas are arranged along a track of a mobile body. Therefore, it becomes possible that number of APs (base station) and handover number (number of times to switch the APs (base station) 11) are reduced, and a communication feasible area is secured so as to prevent break of communication between a mobile body side and a ground side.

## Claims

1. An optical fiber trackside radio communications system, which enables communication between a terminal in a mobile body moving on a track and a base station, comprising:
an optical fiber connected to the base station,
an optical distribution means branching the optical fiber,
a plurality of optical signal/electronic signal interconversion means which interconvert optical signals and electronic signals, and are arranged at a plurality of end tails of the optical fiber branched by the optical distribution means, and
a plurality of antennas which emit electronic signals provided by the respective optical signal/electronic signal interconversion means as radio waves, provide detected radio waves as electronic signals, and are arranged along the track.

2. The optical fiber trackside radio communications system according to claim 1, wherein the respective antennas are arranged so that the track is totally covered by a continuous area comprised of communication feasible areas of the respective antennas.

3. An optical fiber trackside radio communications system, which enables communication between a terminal in a mobile body moving on a track and a base station, comprising:
a first optical fiber trackside radio communications subsystem, comprising an optical fiber connected to the base station, an optical distribution means branching the optical fiber, a plurality of optical signal/electronic signal interconversion means which interconvert optical signals and electronic signals, and are arranged at a plurality of end tails of the optical fiber branched by the optical distribution means, and a plurality of antennas which emit electronic signals provided by the respective optical signal/electronic signal interconversion means as radio waves using a first frequency, provide detected radio waves as electronic signals, and are arranged along the track, and
a second optical fiber trackside radio communications subsystem, comprising an optical fiber connected to the base station, an optical distribution means branching the 'optical fiber, a plurality of optical signal/electronic signal interconversion means which interconvert optical signals and electronic signals, and are arranged at a plurality of end tails of the optical fiber branched by the optical distribution means, and a plurality of antennas which emit electronic signals provided by the respective optical signal/electronic signal interconversion means as radio-waves using a second frequency different from the first frequency, provide detected radio waves as electronic signals, and are arranged along the track,
wherein the first and the second optical fiber trackside radio communications subsystems are arranged adjacently along the track.

4. The optical fiber trackside radio communications system according to any one of claims 1 to 3,
wherein an external communication means provided in the mobile body to communicate with the base station and an internal communication means provided in the mobile body to communicate with the terminal in the mobile body are further provided, and
wherein communication between the terminal and the base station is enabled via the external communication means and the internal communication means.

5. The optical fiber trackside radio communications system according to claim 4, wherein a plurality of the internal communication means are provided in the mobile body, and the plurality of internal communication means are connected to each other.

6. An optical fiber trackside radio communications system, which enables communication between a terminal in a mobile body moving on a track and a base station, comprising:
a first optical fiber trackside radio communications subsystem, comprising an optical fiber connected to the base station, an optical distribution means branching the optical fiber, a plurality of optical signal/electronic signal interconversion means which interconvert optical signals and electronic signals, and are arranged at a plurality of end tails of the optical fiber branched by the optical distribution means, and a plurality of antennas which emit electronic signals provided by the respective optical signal/electronic signal interconversion means as radio waves using a first frequency, provide detected radio waves as electronic signals, and are arranged along the track, and
a second optical fiber trackside radio communications subsystem, comprising an optical fiber connected to the base station, an optical distribution means branching the optical fiber, a 'plurality of optical signal/electronic signal interconversion means which interconvert optical signals and electronic signals, and are arranged at a plurality of end tails of the optical fiber branched by the optical distribution means, and a plurality of antennas which emit electronic signals provided by the respective optical signal/electronic signal interconversion means as radio waves using the same frequency as the first frequency, provide detected radio waves as electronic signals, and are arranged along the track,
wherein the first and the second optical fiber trackside radio communications subsystems are arranged adjacently with a given interval along the track so that their communication feasible areas are not overlapped'with each other.

7. The optical fiber trackside radio communications system according to claim 6,
wherein at least two external communication means provided in the mobile body to communicate with the base station and an internal communication means provided in the mobile body to communicate with the terminal in the mobile body are provided, and
wherein at least two external communication means among the external communication means are arranged so that a distance between the two external communication means is set to be longer than the given interval, one of the two external communication means exist in the communication feasible area when the mobile body passes a communication unfeasible area having the given interval, and continuous communication between the terminal and the base station is enabled via one of the two external communication means and the internal communication means.

8. The optical fiber trackside radio communications system according to clam 7, wherein the two external communication means are arranged in the mobile body so that the mobile body communicates with the first optical fiber trackside radio communications subsystem via the external communication means on the one hand, and the mobile body communicates with the second optical fiber trackside radio communications subsystem via the external communication means on the other hand when the mobile body passes the communication unfeasible area.

9. The optical fiber trackside radio communications system according to any one of claims 1 to 8, wherein a modulation method good at multipath control is used for communication between the antenna and the mobile body.
